# EUROPÄISCHE PATENTSCHRIFT

(11) **EP 2 578 361 B1**
(45) Veröffentlichungstag und Bekanntmachung des Hinweises auf die Patenterteilung: **25.06.2014**
(21) Anmeldenummer: 12185632.2
(22) Anmeldetag: 24.09.2012
(51) Int. Cl.: B24C 7/00, A61C 3/025, A61C 17/02

(54) **Strahlguttankeinheit für eine Dentalstrahlgerätevorrichtung**
Blasting material tank unit for a dental blasting device
Unité de réservoir de matériau de grenaillage pour un dispositif de polissage dentaire

(30) Priorität: 07.10.2011 DE 102011115056
(43) Veröffentlichungstag der Anmeldung: 10.04.2013
(73) Patentinhaber: Renfert GmbH, 78247 Hilzingen (DE)
(72) Erfinder: Liebscher, Sven, 78239 Rielasingen (DE); Kemmelmeier, Mike, 78224 Singen (DE)
(74) Vertreter: Daub, Thomas

(56) Entgegenhaltungen:
- EP-A1- 0 314 022
- EP-A1- 1 671 601
- DE-A1- 3 119 087
- DE-A1- 3 413 446
- DE-B- 1 255 572
- DE-U- 1 941 115

## Beschreibung

### Stand der Technik

Die Erfindung betriff eine Strahlguttankeinheit für eine Dentalstrahlgerätevorrichtung nach dem Oberbegriff des Anspruchs 1.

### Vorteile der Erfindung

Die Erfindung geht aus von einer Strahlguttankeinheit für eine Dentalstrahlgerätevorrichtung, mit zumindest einem Tankbehälter zur Aufnahme eines Strahlguts und mit zumindest einer mit dem Tankbehälter verbundenen Mischeinheit, die ein Gehäuse und ein in das Gehäuse eingesetztes Mischdüsenelement aufweist und die dazu vorgesehen ist, das Strahlgut mit einer Druckluft zu mischen.

Dokumente DE 1255572, DE 3119087 und EP 0314022 offenbaren Strahlguttank-einheizen nach dem Oberbegriff von Anspruch 1.

Es wird vorgeschlagen, dass das Gehäuse der Mischeinheit eine Mischdüsenaufnahme aufweist, die für eine beschädigungsfreie Demontage des Mischdüsenelements von dem Gehäuse durch einen Bediener vorgesehen ist. Dadurch kann das Mischdüsenelement durch den Bediener entfernt werden, wodurch der Bediener die Strahlguttankeinheit und insbesondere die Mischeinheit besonders einfach reinigen kann. Dadurch kann dem Bediener eine eigenständige Wartung der Strahlguttankeinheit erleichtert werden, wodurch insbesondere die Gefahr einer Beschädigung durch unsachgemäße Reinigung reduziert und Kosten für den Bediener verringert werden können. Unter einem "Strahlgut" soll dabei insbesondere ein Material verstanden werden, das pulverförmig und/oder feinkörnig ist und das dazu vorgesehen ist, eine Oberfläche des Dentalprodukts beim Auftreffen abzutragen. Unter einer "Mischeinheit" soll insbesondere eine Einheit verstanden werden, die dazu vorgesehen ist, in einem Betrieb Druckluft mit dem Strahlgut zu vermischen, um ein Luft-Strahlgut-Gemisch bereitzustellen, das für eine Bearbeitung von Dentalprodukten vorgesehen ist. Unter einem "Betrieb" soll weiter insbesondere verstanden werden, dass Schaltventile der Dentalgerätevorrichtung für eine Abgabe eines Strahlmittels geöffnet sind. Unter einem "Mischdüsenelement" soll in diesem Zusammenhang insbesondere ein von der Gehäuseeinheit separat ausgeführtes Bauteil verstanden, das zumindest einen Kanal aufweist, der dazu vorgesehen ist, das Strahlgut der Druckluft zuzuführen. Unter einer "Mischdüsenaufnahme" soll in diesem Zusammenhang insbesondere eine Ausnehmung oder Bohrung in dem Gehäuse der Mischeinheit verstanden werden, die zur Aufnahme und Fixierung des Mischdüsenelements in dem Gehäuse vorgesehen ist. Unter "für eine beschädigungsfreie Demontage vorgesehen" soll insbesondere verstanden werden, dass das Mischdüsenelement bei einer sachgemäßen Demontage durch den Bediener mehrfach demontiert und wieder montiert werden kann, ohne dass dies zu einer funktionellen Beeinträchtigung führt. Unter "vorgesehen" soll insbesondere speziell, ausgestattet und/oder ausgelegt verstanden werden.

Weiter wird vorgeschlagen, dass die Mischdüsenaufnahme für eine Steckverbindung vorgesehen ist, durch die das Mischdüsenelement lösbar in das Gehäuse eingesteckt ist. Dadurch kann das Mischdüsenelement besonders einfach in dem Gehäuse befestigt werden. Unter einer "Steckverbindung" soll dabei insbesondere eine Verbindung verstanden werden, bei der das Mischdüsenelement durch eine lineare Bewegung in das Gehäuse eingesetzt werden kann. Insbesondere soll darunter keine Schraubverbindung verstanden werden. Unter "für eine Steckverbindung vorgesehen" soll insbesondere verstanden werden, dass die Mischdüsenaufnahmen einen Teil einer Steckverbindung ausbildet, durch die das Mischdüsenelement und das Gehäuse fest miteinander verbindbar sind.

Weiter ist es vorteilhaft, wenn die Mischdüsenaufnahme in Richtung des Tankbehälters geöffnet ist. Dadurch kann ein einfaches Handling bei sicherer Befestigung erreicht werden. Zudem kann das Strahlgut einfach der Druckluft zugeführt werden.

Vorzugsweise ist das Mischdüsenelement dazu vorgesehen, durch den Tankbehälter hindurch demontiert und/oder montiert zu werden. Dadurch kann auf eine Demontage der Tankeinheit verzichtet werden, wodurch das Mischdüsenelement schnell und einfach montiert bzw. demontiert werden kann.

In einer vorteilhaften Weiterbildung der Erfindung ist die Mischeinheit für das Venturiprinzip vorgesehen. Dadurch kann eine einfache Mischeinheit realisiert werden. Unter dem "Venturi-Prinzip" soll dabei insbesondere verstanden werden, dass die Mischeinheit einen Düsenkanal aufweist, dessen Geometrie dazu vorgesehen ist, einen Unterdruck zu erzeugen, um Strahlgut aus dem Tankbehälter anzusaugen.

Ferner wird vorgeschlagen, dass das Mischdüsenelement eine Werkzeugaufnahme aufweist, die zur Verbindung mit einem Werkzeug vorgesehen ist. Dadurch kann das Mischdüsenelement einfach montiert und demontiert werden. Unter einer "Werkzeugaufnahme" soll dabei insbesondere eine Ausformung des Mischdüsenelements verstanden werden, die zur festen Verbindung mit einem Werkzeug vorgesehen ist.

Vorzugsweise ist die Werkzeugaufnahme zumindest teilweise für eine Steckverbindung zum Aufstecken des Werkzeugs vorgesehen. Dadurch kann das Werkzeug einfach mit dem Mischdüsenelement verbunden werden.

Zudem wird vorgeschlagen, dass die Strahlguttankeinheit ein Werkzeug zur Demontage des Mischdüsenelements aus dem Gehäuse aufweist, das stabförmig ausgebildet ist. Dadurch kann ein Werkzeug für eine einfache Montage bereitgestellt werden.

Außerdem wird vorgeschlagen, dass die Strahlguttankeinheit zumindest eine Filterpatrone mit einer integrierten Filtereinheit aufweist, die dazu vorgesehen ist, eine Verschmutzung eines geräteinternen Druckluftversorgungssystems durch das Strahlgut zumindest zu verringern. Dadurch kann zum Reinigen der Mischeinheit die Filtereinheit als Ganzes demontiert werden, wodurch dem Bediener die Reinigung weiter erleichtert wird. Unter einer "Filterpatrone" soll dabei insbesondere eine Einheit verstanden werden, die die Filtereinheit aufweist und die dazu vorgesehen ist, beschädigungsfrei lösbar mit dem Gehäuse der Mischeinheit verbunden zu werden.

### Zeichnungen

Weitere Vorteile ergeben sich aus der folgenden Zeichnungsbeschreibung. In den Zeichnungen ist ein Ausführungsbeispiel der Erfindung dargestellt.

### Es zeigen:

- Fig. 1: ein Dentalstrahlgerät als Übersichtsdarstellung,
- Fig. 2: eine Strahlguttankeinheit des Dentalstrahlgeräts,
- Fig. 3: einen Querschnitt durch die Strahlguttankeinheit aus Fig. 2,
- Fig. 4: ein Mischdüsenelement der Strahlguttankeinheit in einem Querschnitt,
- Fig. 5: das Mischdüsenelement in einer Aufsicht und
- Fig. 6: eine perspektivische Darstellung des Mischdüsenelements bei der Montage mit einem Werkzeug.

### Beschreibung des Ausführungsbeispiels

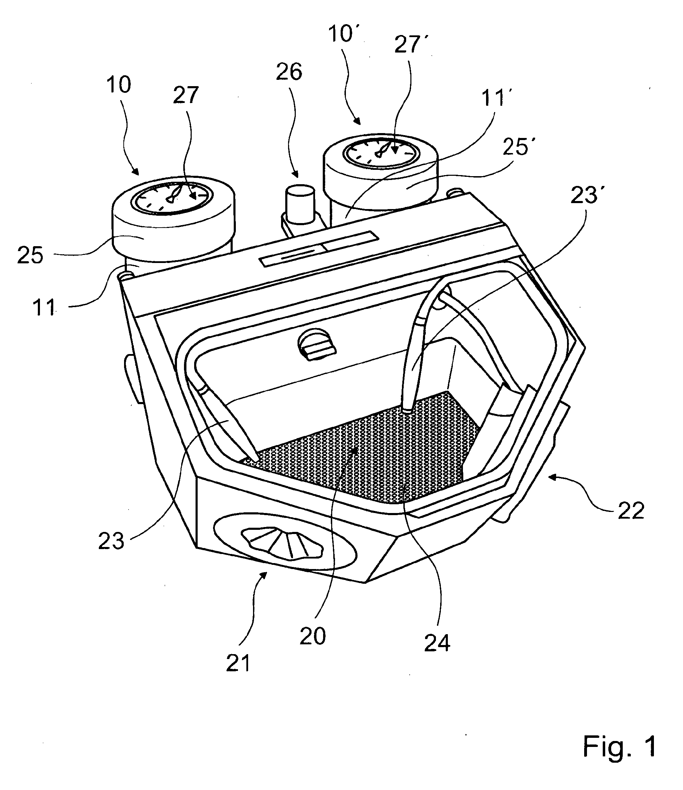

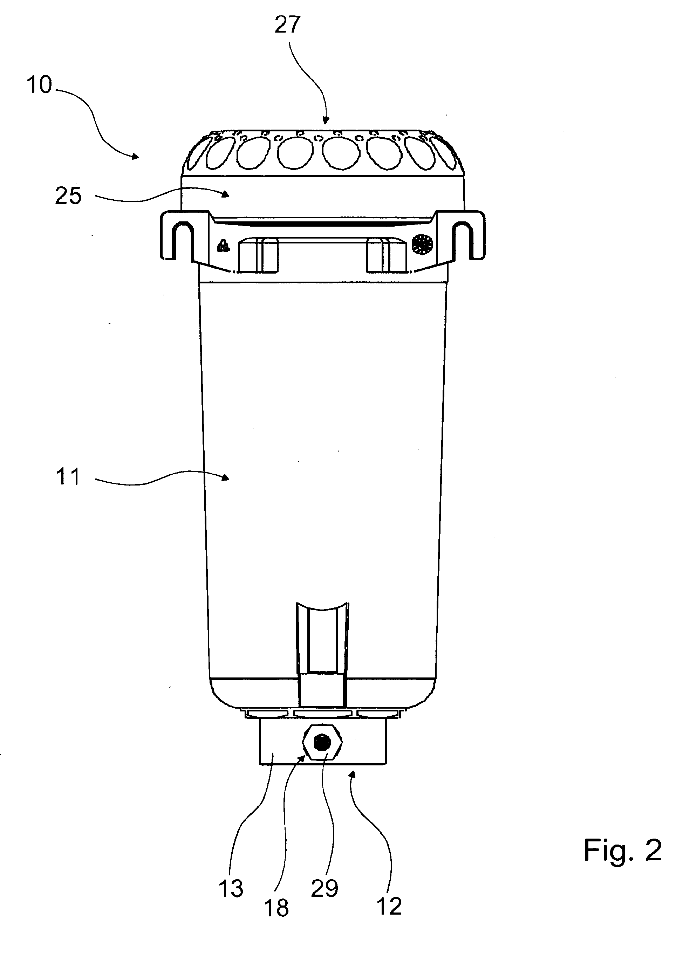

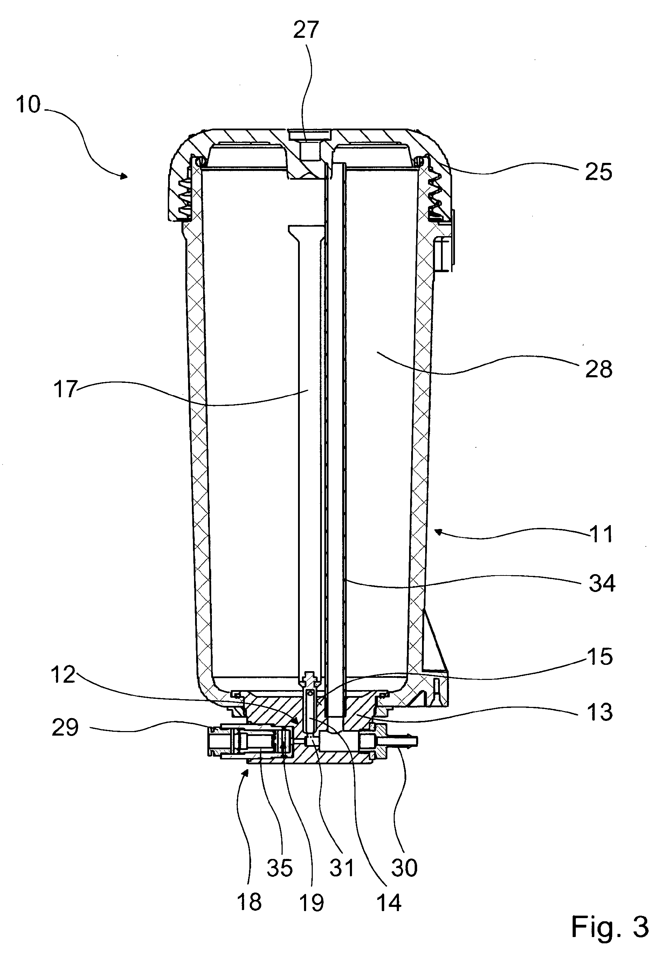

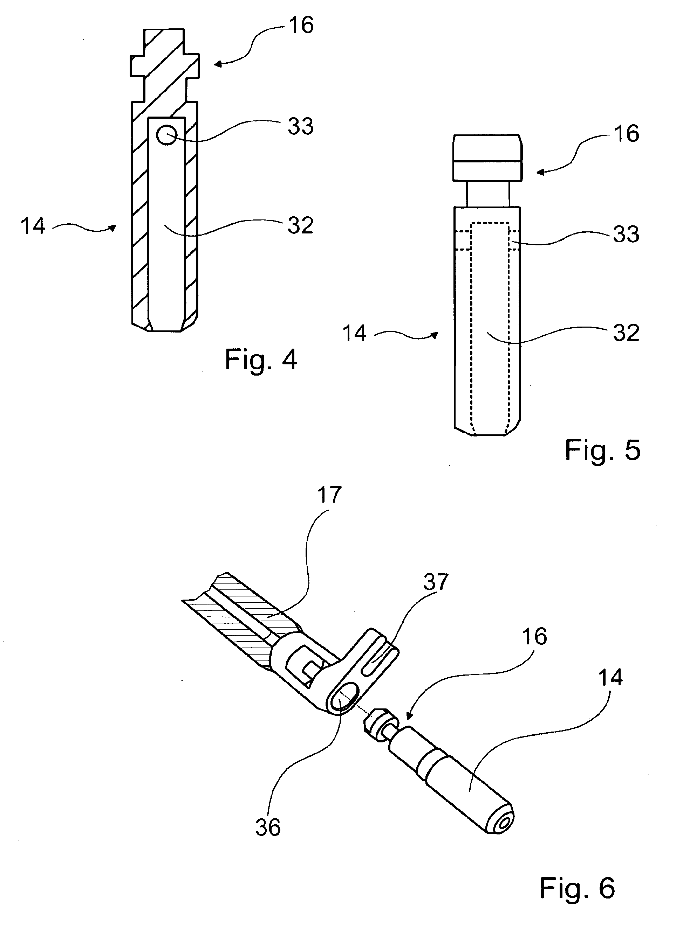

Die Figuren 1 bis 6 zeigen ein Dentalstrahlgerät zur Bearbeitung von Dentalprodukten. Das Dentalstrahlgerät ist für eine Bearbeitung der Dentalprodukte mit Strahlgut vorgesehen. Das Dentalstrahlgerät arbeitet dabei nach einem Sandstrahlprinzip, bei dem das Strahlgut durch Druckluft beschleunigt wird und beim Auftreffen auf das Dentalprodukt Abtragungen an dessen Oberfläche bewirkt.

Das Dentalstrahlgerät umfasst eine Bearbeitungskammer 20, die seitlich zwei Eingriffausnehmungen 21, 22 für einen Bediener des Dentalstrahlgeräts aufweist. Die Bearbeitungskammer 20 weist eine sechseckige Kontur auf und ist in einem oberen Bereich mittels eines transparenten Deckels verschlossen. Der Deckel der Bearbeitungskammer 20 liegt in einem geschlossenen Zustand auf einem Dichtungselement der Bearbeitungskammer 20 auf. Innerhalb der Bearbeitungskammer 20 sind Bearbeitungswerkzeuge 23, 23' angeordnet. Das Dentalstrahlgerät umfasst einen Boden 24 mit einem lose aufgelegten Kunststoffgitter. In einem Betrieb kann das Strahlgut somit durch das Kunststoffgitter aus einem Bearbeitungsbereich in der Bearbeitungskammer 20 nach unten durchfallen und wird von dem Boden 24 aufgefangen.

In einem den Eingriffausnehmungen 21, 22 abgewandten Bereich der Bearbeitungskammer 20 weist das Dentalstrahlgerät eine Dentalstrahlgerätevorrichtung mit zwei Strahlguttankeinheiten 10, 10' auf. Die Strahlguttankeinheiten 10, 10' sind lösbar mit einem Grundkörper des Dentalstrahlgeräts verbunden. Beide Strahlguttankeinheiten 10, 10' umfassen jeweils einen Tankdeckel 25, 25' und einen Tankbehälter 11, 11'. Jede der Strahlguttankeinheiten 10, 10" ist mittels eines nicht näher dargestellten Schlauchsystems mit einem der Bearbeitungswerkzeuge 23, 23' verbunden. Strahlgut, welches sich in der entsprechenden Strahlguttankeinheit 10, 10' befindet, wird als Strahlgut-Luft-Gemisch über das Schlauchsystem zu dem Bearbeitungswerkzeug 23, 23' in der Bearbeitungskammer 20 geführt. Die Strahlguttankeinheiten 10, 10' stehen in einem Betrieb unter einem Überdruck. Dieser Überdruck kann vom Bediener über eine Einstelleinheit 26 variiert und eingestellt werden. Mittels der Einstellung des Überdrucks in der entsprechenden Strahlguttankeinheit 10, 10' kann eine Strahlenergie des Strahlgut-Luft-Gemischs, welches aus einer Düse des entsprechenden Bearbeitungswerkzeugs 23, 23' austritt, eingestellt werden.

In die Tankdeckel 25, 25' der Strahlguttankeinheiten 10, 10' ist jeweils eine Drucksensoreinheit 27, 27' zum Ablesen und Überwachen eines eingestellten Überdrucks in einem Innenraum 28 der entsprechenden Strahlguttankeinheiten 10, 10' integriert. Die Drucksensoreinheiten 27, 27' sind jeweils als Manometer ausgebildet. Die beiden Strahlguttankeinheiten 10, 10' sind dabei analog ausgebildet. Im Folgenden soll daher lediglich die Strahlguttankeinheit 10 beschrieben werden. Bezüglich der zweiten Strahlguttankeinheit 10' soll auf die Beschreibung der Strahlguttankeinheit 10 verwiesen werden.

Der Tankdeckel 25 der Strahlguttankeinheit 10 umfasst ein Gewinde. Der zugehörige Tankbehälter 1 1 weist ein korrespondierendes Gewinde auf. Der Tankdeckel 25 ist auf den Tankbehälter 11 aufgeschraubt. Der Tankbehälter 11 ist aus einem transparenten Kunststoff gefertigt. Alternativ wäre auch denkbar, den Tankbehälter 11 aus insbesondere siliciumhaltigem Glas zu fertigen. Durch die Verwendung eines transparenten Materials kann ein Bediener des Dentalstrahlgeräts einen Füllstand des Strahlguts in der Strahlguttankeinheit 10 erkennen.

Der Tankbehälter 11 der Strahlguttankeinheit 10 weist einen Innenraum 28 auf, der das Strahlgut aufnimmt. Zudem ist in dem Innenraum 28 der Strahlguttankeinheit 10 Luft angeordnet, die in einem Betrieb im Vergleich zu einer Umgebung der Strahlguttankeinheit 10 unter einem Überdruck steht. Die Drucksensoreinheit 27 sensiert den Wert des Überdrucks und gibt diesen Wert über eine Ausgabeeinheit an einen Bediener weiter.

Die Strahlguttankeinheit 10, die den Tankbehälter 11 umfasst, weist zwei Anschlusselemente 29, 30 auf. Das erste Anschlusselement 29 bildet einen Drucklufteingang der Strahlguttankeinheit 10 aus. Das Anschlusselement 29 ist für einen Anschluss an ein nicht näher dargestelltes geräteinternes Druckluftversorgungssystem des Dentalstrahlgeräts vorgesehen. Das zweite Anschlusselement 30 bildet einen Anschluss für das Bearbeitungswerkzeug 23 aus. An das zweite Anschlusselement 30 ist in montiertem Zustand das Schlauchsystem angeschlossen, das das Bearbeitungswerkzeug 23 an die Strahlguttankeinheit 10 anbindet. Das zweite Anschlusselement 30 bildet somit einen Ausgang für das Luft-Strohlgut-Gemisch aus.

Zur Vermischung der über das Anschlusselement 29 in die Strahlguttankeinheit 10 eingeleiteten Druckluft mit dem Strahlgut, das in dem Innenraum 28 der Strahlguttankeinheit 10 bevorratet ist, umfasst die Strahlguttankeinheit 10 eine Mischeinheit 12. Die Mischeinheit 12 ist in einem Bodenbereich der Strahlguttankeinheit 10 angeordnet und bildet einen Boden des Tankbehälters 11 aus. Die Mischeinheit 12 umfasst ein Gehäuse 13, das mit dem Tankbehälter 11 verbunden ist. Das Gehäuse 13 der Mischeinheit 12 und der Tankbehälter 11 sind dabei über eine Schraubverbindung miteinander verbunden und können beschädigungsfrei voneinander gelöst werden.

Das Gehäuse 13 der Mischeinheit 12 bildet einen Mischkanal 31 aus, der in einem Betrieb von der Druckluft durchströmt wird. Weiter umfasst die Mischeinheit 12 ein Mischdüsenelement 14, das in das Gehäuse 13 der Mischeinheit 12 eingesetzt ist und von dem Gehäuse 13 aufgenommen wird. Das Mischdüsenelement 14 weist einen Düsenkanal 32 auf, der an einer Engstelle in den Mischkanal 31 mündet. Der Düsenkanal 32 in dem Mischdüsenelement 14 ist als eine längs verlaufende Bohrung in dem Mischdüsenelement 14 ausgebildet. Zur Zuführung des Strahlguts in den Düsenkanal 32 weist das Mischdüsenelement 14 an einem dem Mischkanal 31 abgewandten Ende eine Ouerbohrung 33 auf, die in montiertem Zustand in den Innenraum 28 des Tankbehälters 11 mündet.

Die Querbohrung 33 ist dazu vorgesehen, das in dem Tankbehälter 11 bevorratete Strahlgut aufzunehmen. Der Düsenkanal 32 ist dazu vorgesehen, das Strahlgut an den Mischkanal 31 heranzuführen. In einem Betrieb dringt das Strahlgut in die Ouerbohrung 33 ein und wird anschließend durch den Düsenkanal 32 hindurchbefördert. Die Mischeinheit 12 mit dem Mischdüsenelement 14 und dem Mischkanal 31 arbeitet nach dem Venturi-Prinzip, wobei eine aus dem Venturi-Prinzip bedingte Ansaugkraft durch Rieseleffekte des Strahlguts unterstützt wird. Das Strahlgut wird somit durch Ansaugung mittels Unterdruck und durch Schwerkrafteffekte, die das Rieseln des Strahlguts durch das Mischdüsenelement 14 bewirken, dem die Druckluft führenden Mischkanal 31 zugeführt, wodurch das Luft-Strahlgut-Gemisch bereitgestellt ist.

Ferner umfasst die Mischeinheit 12 ein Tankbelüftungselement 34, durch das dem Innenraum 28 des Tankbehälters 11 in einem Betrieb Luft zugeführt wird. Über das Tankbelüftungselement 34 wird im Betrieb der Überdruck in der Strahlguttankeinheit 10 erzeugt. Das Tankbelüftungselement 34 ist als ein flexibles Rohr ausgebildet, das über einen Anschluss an den Mischkanal 31 angebunden ist. Das Tankbelüftungselement 34 durchsetzt den Innenraum 28 des Tankbehälters 11 nahezu vollständig und endet im Bereich des Tankdeckels 25.

Das Anschlusselement 30, das den Ausgang für das Luft-Strohlgut-Gemisch ausbildet, ist in einem Bereich, der zur Befestigung in dem Gehäuse 13 der Mischeinheit 12 vorgesehen ist, mit einem Außengewinde versehen. Das Gehäuse 13 weist ein Innengewinde auf, in das das Anschlusselement 30 eingeschraubt ist. In einem Bereich, der in montiertem Zustand aus dem Gehäuse 13 herausragt, bildet das Anschlusselement 30 einen Steckanschluss für das Schlauchsystem aus. Ein Schlauch des Schlauchsystems kann dabei werkzeugfrei auf das Anschlusselement 30 aufgesteckt werden.

Strömungstechnisch ist zwischen dem Anschlusselement 29, das den Drucklufteingang ausbildet, und dem Mischdüsenelement 14 eine Filtereinheit 19 angeordnet. Die Filtereinheit 19 verhindert, dass das der Druckluft beigefügte Strahlgut, beispielsweise bei einem Abschalten des Dentalstrahlgeräts, durch das Anschlusselement 29 hindurch in das geräteinterne Druckversorgungssystem des Dentalstrahlgeräts gelangt und das Dentalstrahlgerät beschädigt. Die Filtereinheit 19 weist ein Filterpaket mit mehreren Filterelementen auf, die hintereinander angeordnet sind. Die Filterelemente sind wenigstens teilweise als Vliesfilter ausgebildet. Die Mischeinheit 12 ist dabei strömungstechnisch unmittelbar nach der Filtereinheit 19 angeordnet, d.h., die durch die Filtereinheit 19 hindurchströmende Druckluft wird unmittelbar nach einem Durchströmen der Filtereinheit 19 mit dem Strahlgut vermischt.

Zur Anordnung der Filtereinheit 19 umfasst die Dentalstrahlgerätvorrichtung eine Filterpatrone 18. Die Filtereinheit 19 ist fest in die Filterpatrone 18 integriert. Die Filterpatrone 18 ist dabei nicht für eine Zerlegung durch den Bediener, beispielsweise zur Reinigung der Filtereinheit 19, vorgesehen. Die Filtereinheit 19 kann lediglich durch Zerstörung aus der Filterpatrone 18 entfernt werden.

Die Filterpatrone 18 umfasst ein Filterpatronengehäuse 35, in das die Filtereinheit 19 eingesetzt ist. Die Filtereinheit 19 ist in dem Filterpatronengehäuse 35 fixiert und kann lediglich durch Beschädigung oder Zerstörung der Filterpatrone 18 aus dem Filterpatronengehäuse 35 entfernt werden. Das Filterpatronengehäuse 35 ist mittels einer Schraubverbindung mit dem Gehäuse 13 der Mischeinheit 12 verbunden. Das Filterpatronengehäuse 35 weist in einem Bereich, der in montiertem Zustand in dem Gehäuse 13 der Mischeinheit 12 angeordnet ist, ein Außengewinde auf. Das Gehäuse 13 der Mischeinheit 12 weist ein korrespondierendes Innengewinde auf. In montiertem Zustand ist damit die Filterpatrone 18 über das Gehäuse 13 der Mischeinheit 12 mit der Strahlguttankeinheit 10 verbunden. Durch die Schraubverbindung sind die Strahlguttankeinheit 10 und die Filterpatrone 18 beschädigungsfrei voneinander lösbar. Das Filterpatronengehäuse 35 kann durch die Schraubverbindung einfach aus dem Gehäuse 13 der Mischeinheit 12 herausgeschraubt und gereinigt oder ausgetauscht werden. Das Filterpatronengehäuse 35 ist aus einem Kunststoff gefertigt, kann grundsätzlich aber auch aus Metall sein.

Das Anschlusselement 29 ist in das Filterpatronengehäuse 35 eingepresst. Das Anschlusselement 29 bildet einen sogenannten Push-In-Stecker aus, an den ein korrespondierender Stecker des Druckluftversorgungssystems durch Einstecken angeschlossen werden kann. Das Anschlusselement 29 ist in den Zeichnungen vereinfacht dargestellt. Um den Push-In-Stecker auszubilden, ist insbesondere eine mehrteilige Ausbildung des Anschlusselements 29 vorteilhaft. Das Anschlusselement 29 ist in einer solchen Ausgestaltung teilweise aus Kunststoff und teilweise aus Metall gefertigt. Die dargestellte Ausgestaltung des Anschlusselements 29 ist dabei lediglich eine von unterschiedlichen, dem Fachmann als sinnvoll erscheinenden Ausgestaltungen. Grundsätzlich können in das Filterpatronengehäuse 35 auch anders ausgestaltete Anschlusselemente 29 eingepresst bzw. eingesetzt werden.

Die Filterelemente der Filtereinheit 19 sind lose in das Filterpatronengehäuse 35 eingelegt. Die Filtereinheit 19 umfasst dabei neben den Filterelementen ein Gitterelement, das unmittelbar benachbart zu den Filterelementen angeordnet ist. Das Gitterelement ist als ein Metallgitter ausgebildet. Das Gitterelement ist ausgangsseitig von den Filterelementen angeordnet. Es stabilisiert die Filterelemente entlang einer Richtung, in der die Druckluft im Betrieb strömt, und verhindert, dass die Druckluft die Filterelemente innerhalb des Filterpatronengehäuses 35 bewegt. Das Gitterelement ist lose in das Filterpatronengehäuse 35 eingelegt. Entlang der Richtung, in der die Druckluft in dem Betrieb strömt, ist das Gitterelement formschlüssig in dem Filterpatronengehäuse 35 gehaltert.

Die Filterpatrone 18 weist das Anschlusselement 29 auf. Das Anschlusselement 29 ist unlösbar mit dem Filterpatronengehäuse 35 verbunden. Weiter umfasst die Filterpatrone 18 ein Einsatzelement, das eingangsseitig der Filtereinheit 19 angeordnet ist. Das Einsatzelement fixiert die Filtereinheit 19 entgegen der Richtung, entlang der die Druckluft im Betrieb strömt. Das Einsatzelement ist lose in das Filterpatronengehäuse 35 eingelegt. Eine Seite des Einsatzelements drückt gegen die Filtereinheit 19. Mit der anderen Seite stützt sich das Einsatzelement gegen das Anschlusselement 29 ab. Das Einsatzelement ist ebenfalls aus einem Kunststoff gefertigt.

Zudem umfasst die Filterpatrone 18 ein Dichtelement, das zwischen dem Anschlusselement 29 und dem Einsatzelement angeordnet ist. Das Dichtelement ist als ein Dichtring ausgebildet. Das Dichtelement, das zwischen dem Anschlusselement 29 und dem Einsatzelement verklemmt ist, ist für eine Dichtung eines in das Anschlusselement 29 eingesteckten Steckers vorgesehen. Durch das Einstecken eines Steckers in das Anschlusselement 29 dichtet das Dichtelement den Stecker gegen das Einsatzelement ab, wodurch eine gasdichte Verbindung realisiert ist.

Das Anschlusselement 29 ist in das Filterpatronengehäuse 35 eingepresst. Das Anschlusselement 29 schließt die Filterpatrone 18 eingangsseitig ab. Bei einer Montage der Filterpatrone 18 wird zunächst das Gitterelement der Filtereinheit 19 in das Filterpatronengehäuse 35 eingelegt. Weiter werden die Filterelemente und das Einsatzelement in das Filterpatronengehäuse 35 eingelegt. Anschließend wird das Dichtelement in das Filterpatronengehäuse 35 eingelegt. Danach wird das Anschlusselement 29 in das Filterpatronengehäuse 35 eingesetzt und mit dem Filterpatronengehäuse 35 verpresst. Das Anschlusselement 29 fixiert dadurch insbesondere die Filtereinheit 19 und das Einsatzelement in dem Filterpatronengehäuse 35. Mit dem Einpressen des Anschlusselements 29 ist die Filterpatrone 18 montiert.

Die Filterpatrone 18 ist somit verpresst. Durch das Verpressen ist die Filterpatrone 18 als ein Bauteil ausgebildet, dessen Komponenten unlösbar miteinander verbunden sind und das nicht für eine Demontage vorgesehen ist. Grundsätzlich sind dabei auch andere Verbindungen zur Montage der Filterpatrone 18 denkbar, die eine zerstörungsfreie Demontage verhindern, wie beispielsweise ein Verkleben des Anschlusselements 29 und/oder des Einsatzelements mit dem Filterpatronengehäuse 35.

Nach der Montage wird die Filterpatrone 18 in das Gehäuse 13 der Mischeinheit 12 eingeschraubt. Zum Einschrauben in das Gehäuse 13 der Mischeinheit 12 weist das Filterpatronengehäuse 35 in einem Bereich, der in montiertem Zustand aus dem Gehäuse 13 der Mischeinheit 12 herausragt, eine Werkzeugangriffsfläche auf. Das Filterpatronengehäuse 35 ist in diesem Bereich als ein Außensechskant ausgerührt. Zwischen dem Filterpatronengehäuse 35 und dem Gehäuse 13 der Mischeinheit 12 ist dabei ein nicht näher dargestellter Dichtring angeordnet, der die Verbindung zwischen dem Gehäuse 13 und dem Filterpatronengehäuse 35 gasdicht abschließt. Der nicht näher darstellte Dichtring ist dabei verliersicher mit dem Filterpatronengehäuse 35 verbunden.

Zur Befestigung des Mischdüsenelements 14 in dem Gehäuse 13 der Mischeinheit 12 umfasst die Strahlguttankeinheit 10 eine Mischdüsenaufnahme 15, die für eine beschädigungsfreie Demontage des Mischdüsenelements 14 von dem Gehäuse 13 durch einen Bediener vorgesehen ist. Die Mischdüsenaufnahme 15 ist zudem für eine Montage des Mischdüsenelements 14 durch den Bediener vorgesehen. Der Bediener kann somit das Mischdüsenelement 14 wiederholt aus dem Gehäuse 13 der Mischeinheit 12 ausbauen und wieder einbauen, ohne dass bei einer sachgemäßen Ausführung das Mischdüsenelement 14 dabei beschädigt wird.

Die Mischdüsenaufnahme 15 ist für eine Steckverbindung vorgesehen. In montiertem Zustand bildet die Mischdüseneinheit eine Steckverbindung aus, durch die das Mischdüsenelement 14 lösbar in das Gehäuse 13 eingesteckt ist. Das Mischdüsenelement 14 ist dadurch im Wesentlichen kraftschlüssig, und zwar aufgrund von Reibung zwischen dem Gehäuse 13 und dem Mischdüsenelement 14, in dem Gehäuse 13 fixiert.

Die Mischdüsenaufnahme 15 ist in Richtung des Tankbehälters 11 geöffnet. Das Mischdüsenelement 14 wird somit entlang seiner Haupterstreckungsrichtung in das Gehäuse 13 eingesetzt. Es wird dabei zuerst mit dem Ende, an das in montiertem Zustand der Mischkanal 31 angrenzt, in das Gehäuse 13 eingesetzt. Dann wird das Mischdüsenelement 14 entlang seiner Haupterstreckungsrichtung in das Gehäuse 13 eingesteckt. Das Mischdüsenelement 14 ist dabei dazu vorgesehen, durch den Tankbehälter 1 1 hindurch demontiert und montiert zu werden, d.h. bei aufgeschraubten Tankbehälter 11 kann das Mischdüsenelement 14 durch den von dem Tankbehälter 11 aufgespannten Innenraum 28 hindurchgeführt und montiert werden.

Für die Montage und Demontage weist das Mischdüsenelement 14 eine Werkzeugaufnahme 16 auf, die zur Verbindung mit einem Werkzeug 17 vorgesehen ist. Die Werkzeugaufnahme 16 weist zwei unterschiedliche Bereiche auf, die zur Verbindung mit dem Werkzeug 17 vorgesehen sind. Der erste Bereich ist für eine Steckverbindung mit dem Werkzeug 17 und für die Demontage des Mischdüsenelements 14 vorgesehen. In diesem Bereich weist das Mischdüsenelement 14 an seinem Außenumfang einen Einstich auf, der einen Teil der Werkzeugaufnahme 16 ausbildet und in den das Werkzeug 17 seitlich einsteckbar ist. Für die Demontage entlang der Haupterstreckungsrichtung ist das Mischdüsenelement 14 formschlüssig mit dem Werkzeug 17 verbindbar. Der zweite Bereich der Werkzeugaufnahme 16 ist zur drehfesten Verbindung mit dem Werkzeug 17 vorgesehen, um das Mischdüsenelement 14 nach einem Einsetzen in die Mischdüsenaufnahme 15 auszurichten. Die Werkzeugaufnahme 16 ist dabei an das Mischdüsenelement 14 an das Ende, in das auch die Ouerbohrung 33 eingebracht ist, angeformt.

Das Werkzeug 17 zur Entnahme des Mischdüsenelements 14 aus dem Gehäuse 13 der Mischeinheit 12 ist stabförmig ausgebildet. Es weist eine Länge auf, die mit einer Tiefe des Tankbehälters 11 korrespondiert. In dem dargestellten Ausführungsbeispiel ist das Werkzeug 17 etwas kürzer als der Tankbehälter 11 tief ist. Der Tankbehälter 11 weist dafür einen Durchmesser auf, der eine Handhabung des Werkzeugs 17 innerhalb des Innenraums 28 ermöglicht. Insbesondere bei Tankbehältern 11 mit kleinerem Durchmesser ist grundsätzlich aber auch eine längere Ausführung des Werkzeugs 17 denkbar.

An einem Ende, das zur Verbindung mit dem Mischdüsenelement 14 vorgesehen ist, ist das Werkzeug 17 schuhförmig ausgeführt. Das Werkzeug 17 weist an diesem Ende eine Ausnehmung 36 auf, in die das Mischdüsenelement 14 eingesetzt werden kann, und eine gabelförmige Ausbildung 37, die zur formschlüssige Verbindung mit dem Mischdüsenelement 14 vorgesehen ist.

Für die Demontage wird das Werkzeug 17 auf das Ende des Mischdüsenelements 14, mit dem das Mischdüsenelement 14 in den Tankbehälter 11 hineinragt, seitlich aufgesteckt. Nachdem das Werkzeug 17 auf das Mischdüsenelement 14 aufgesteckt ist, wird das Mischdüsenelement 14 mittels des Werkzeugs 17 aus dem Gehäuse 13 herausgezogen. Das Mischdüsenelement 14 ist damit demontiert.

Zur Montage wird das Mischdüsenelement 14 in die Ausnehmung 36 des Werkzeugs 17 eingesetzt. Dadurch ist das Mischdüsenelement 14 mit dem Werkzeug 17 verbunden und kann durch den Innenraum 28 des Tankbehälters 11 hindurch in die Mischdüsenaufnahme 15 eingesetzt werden. Anschließend drückt der Bediener das Mischdüsenelement 14 mit dem Werkzeug 17 in die Mischdüsenaufnahme 15 hinein. Danach wird das Werkzeug 17 von dem Mischdüsenelement 14 abgezogen und auf den Bereich der Werkzeugaufnahme 16, der für die Ausrichtung vorgesehen ist, mit der gabelförmigen Ausbildung 37 aufgesetzt. Das Gehäuse 13 der Mischeinheit 12 weist eine Markierung auf, die für die Ausrichtung des Mischdüsenelements 14 vorgesehen ist. Nachdem das Werkzeug 17 auf das Mischdüsenelement 14 aufgesetzt ist, dreht der Bediener das Mischdüsenelement 14 mittels des Werkzeugs 17, bis das Mischdüsenelement 14, dessen Lage der Bediener anhand der Werkzeugaufnahme 16 bestimmen kann, mit der Markierung an dem Gehäuse 13 fluchtend ausgerichtet ist. Das Mischdüsenelement 14 ist damit montiert.

Für die Montage umfassen das Mischdüsenelement 14 und das Gehäuse 13 der Mischeinheit 12 je-weils eine Stirnfläche, die für die Montage einen Tiefenanschlag ausbilden. Die Stirnfläche des Mischdüsenelements 14 ist dabei durch das Ende des Mischdüsenelements 14 ausgebildet. Grundsätzlich ist es aber auch denkbar, dass das Mischdüsenelement 14 zur Ausbildung der Stirnfläche eine Stufenform aufweist. Die Mischdüsenaufnahme 15 weist in einem Bereich, in dem sie an dem Mischkanal 31 angrenzt, eine Einengung auf, mit der das Mischdüsenelement 14 bei der Montage in Anschlag gebracht wird. Eine Tiefe, mit der das Mischdüsenelement 14 in das Gehäuse 13 eingesetzt werden kann, ist damit durch die Mischdüsenaufnahmen 15 vorgegeben.

Zum Reinigen kann der Bediener das Mischdüsenelement 14 aus dem Gehäuse 13 entfernen und durchblasen. Weiter kann der Bediener die Filterpatrone 18 aus dem Gehäuse 13 herausschrauben und anschließend durchblasen. Zudem ist durch den Bediener das ausgangsseitige Anschlusselement 30 demontierbar, wodurch der Bediener nach einer vollständigen Demontage der Filterpatrone 18, des Mischdüsenelements 14 und des Anschlusselements 30 die Mischeinheit 12 einfach reinigen kann. Insbesondere den Mischkanal 31 und den Düsenkanal 32 kann der Bediener nach der Demontage einfach durchblasen.

**Bezugszeichen**

| | | | |
|---|---|---|---|
| 10 | Strahlguttankeinheit | 25 | Tankdeckel |
| 11 | Tankbehälter | 26 | Einstelleinheit |
| 12 | Mischeinheit | 27 | Drucksensoreinheit |
| 13 | Gehäuse | 28 | Innenraum |
| 14 | Mischdüsenelement | 29 | Anschlusselement |
| 15 | Mischdüsenaufnahme | 30 | Anschlusselement |
| 16 | Werkzeugaufnahme | 31 | Mischkanal |
| 17 | Werkzeug | 32 | Düsenkanal |
| 18 | Filterpatrone | 33 | Ouerbohrung |
| 19 | Filtereinheit | 34 | Tankbelüftungselement |
| 20 | Bearbeitungskammer | 35 | Filterpatronengehäuse |
| 21 | Eingriffausnehmung | 36 | Ausnehmung |
| 22 | Eingriffausnehmung | 37 | gabelförmige Ausbildung |
| 23 | Bearbeitungswerkzeug | | |
| 24 | Boden | | |

## Patentansprüche

1. Strahlguttankeinheit für eine Dentalstrahlgerätevorrichtung, mit zumindest einem Tankbehälter (11) zur Aufnahme eines Strahlguts und mit zumindest einer mit dem Tankbehälter (11) verbundenen Mischeinheit (12), die ein Gehäuse (13) und ein in das Gehäuse (13) eingesetztes Mischdüsenelement (14) aufweist und die dazu vorgesehen ist, das Strahlgut mit einer Druckluft zu mischen,
**dadurch gekennzeichnet, dass**
das Gehäuse (13) der Mischeinheit (12) eine Mischdüsenaufnahme (15) aufweist, die für eine beschädigungsfreie Demontage des Mischdüsenelements (14) von dem Gehäuse durch einen
Bediener ausgebildet ist, wobei das Mischdüsenelement (14) beschaffen ist, durch den Tankbehälter (11) hindurch demontiert und/oder montiert zu werden.

2. Strahlguttankeinheit nach Anspruch 1,
**dadurch gekennzeichnet, dass**
die Mischdüsenaufnahme (15) für eine Steckverbindung ausgebildet ist, durch die das Mischdüsenelement (14) lösbar in das Gehäuse (13) eingesteckt ist.

3. Strahlguttankeinheit nach Anspruch 1 oder 2,
**dadurch gekennzeichnet, dass**
die Mischdüsenaufnahme (15) in Richtung des Tankbehälters (11) geöffnet ist.

4. Strahlguttankeinheit nach einem der vorhergehenden Ansprüche,
**dadurch gekennzeichnet, dass**
die Mischeinheit (12) für das Venturiprinzip ausgebildet ist.

5. Strahlguttankeinheit nach einem der vorhergehenden Ansprüche,
**dadurch gekennzeichnet, dass**
das Mischdüsenelement (14) eine Werkzeugaufnahme (16) aufweist, die zur Verbindung mit einem Werkzeug (17) ausgebildet ist.

6. Strahlguttankeinheit nach Anspruch 6,
**dadurch gekennzeichnet, dass**
die Werkzeugaufnahme (16) zumindest teilweise für eine Steckverbindung zum Aufstecken des Werkzeugs (17) ausgebildet ist.

7. Strahlguttankeinheit nach einem der vorhergehenden Ansprüche,
**gekennzeichnet durch**
ein Werkzeug (17) zur Demontage des Mischdüsenelements (14) aus dem Gehäuse (13), das stabförmig ausgebildet ist.

8. Strahlguttankeinheit nach einem der vorhergehenden Ansprüche,
**gekennzeichnet durch**
zumindest eine Filterpatrone (18) mit einer integrierten Filtereinheit (19), die dazu ausgebildet ist, eine Verschmutzung eines geräteinternen Druckluftversorgungssystems **durch** das Strahlgut zumindest zu verringern.

9. Dentalstrahlgerätevorrichtung mit einer Strahlguttankeinheit (10) nach einem der vorhergehenden Ansprüche

## Claims

1. Blasting material tank unit for a dental blasting apparatus device, with at least one tank container (11) for receiving a blasting material, and with at least one mixing unit (12) which is connected to the tank container (11) and has a housing (13) and a mixing nozzle element (14) inserted in the housing (13) and which is provided for the purpose of mixing the blasting material with compressed air, **characterized in that** the housing (13) of the mixing unit (12) has a mixing nozzle receiver (15) which is implemented to permit damage-free removal of the mixing nozzle element (14) from the housing by an operator, wherein the mixing nozzle element (14) is configured to be removed and/or fitted through the tank container (11).

2. Blasting material tank unit according to Claim 1, **characterized in that** the mixing nozzle receiver (15) is implemented for a plug connection, by means of which the mixing nozzle element (14) is plugged releasably into the housing (13).

3. Blasting material tank unit according to Claim 1 or 2, **characterized in that** the mixing nozzle receiver (15) is open in the direction of the tank container (11).

4. Blasting material tank unit according to one of the preceding claims, **characterized in that** the mixing unit (12) is implemented for the Venturi principle.

5. Blasting material tank unit according to one of the preceding claims, **characterized in that** the mixing nozzle element (14) has a tool receiver (16) which is implemented for connection to a tool (17).

6. Blasting material tank unit according to Claim 6, **characterized in that** the tool receiver (16) is at least partially implemented for a plug connection for plugging on the tool (17).

7. Blasting material tank unit according to one of the preceding claims, **characterized by** a rod-shaped tool (17) for removing the mixing nozzle element (14) from the housing (13).

8. Blasting material tank unit according to one of the preceding claims, **characterized by** at least one filter cartridge (18) with an integrated filter unit (19) which is implemented to at least reduce soiling of an apparatus-internal compressed-air supply system by the blasting material.

9. Dental blasting apparatus device with a blasting material tank unit (10) according to one of the preceding claims.

## Revendications

1. Unité de réservoir de matériau de sablage pour un appareil dispositif de polissage dentaire, comprenant au moins un récipient réservoir (11) pour recevoir un matériau de sablage et comprenant au moins une unité de mélange (12) connectée au récipient réservoir (11), laquelle présente un boîtier (13) et un élément de buse mélange (14) inséré dans le boîtier (13) et qui est prévue pour mélanger le matériau de sablage avec de l'air comprimé,
**caractérisée en ce que**
le boîtier (13) de l'unité de mélange (12) présente un réceptacle de buse mélange (15), lequel réceptacle de buse mélange (15) est réalisé pour permettre à un utilisateur de démonter, sans endommagement, l'élément de buse mélange (14) du boîtier, l'élément de buse mélange (14) étant configuré pour être démontable et/ou montable à travers le récipient réservoir (11).

2. Unité de réservoir de matériau de sablage selon la revendication 1,
**caractérisée en ce que**
le réceptacle de buse mélange (15) est réalisé pour une connexion enfichable grâce à laquelle l'élément de buse mélange (14) est enfiché de manière amovible dans le boîtier (13).

3. Unité de réservoir de matériau de sablage selon la revendication 1 ou 2,
**caractérisée en ce que**
le réceptacle de buse mélange (15) est ouvert dans la direction du récipient réservoir (11).

4. Unité de réservoir de matériau de sablage selon l'une quelconque des revendications précédentes,
**caractérisée en ce que**
l'unité de mélange (12) est réalisée pour le principe Venturi.

5. Unité de réservoir de matériau de sablage selon l'une quelconque des revendications précédentes,
**caractérisée en ce que**
l'élément de buse mélange (14) présente un réceptacle d'outil (16) qui est réalisé pour la connexion à un outil (17).

6. Unité de réservoir de matériau de sablage selon la revendication 6,
**caractérisée en ce que**
le réceptacle d'outil (16) est réalisé au moins en partie pour une connexion enfichable en vue de l'enfichage de l'outil (17).

7. Unité de réservoir de matériau de sablage selon l'une quelconque des revendications précédentes,
**caractérisée par**
un outil (17) pour le démontage de l'élément de buse mélange (14) du boîtier (13), lequel outil (17) est réalisé en forme de bâton.

8. Unité de réservoir de matériau de sablage selon l'une quelconque des revendications précédentes,
**caractérisée par**
au moins une cartouche de filtre (18) avec une unité de filtre (19) intégrée qui est réalisée pour au moins réduire un encrassement par le matériau de sablage d'un système d'alimentation en air comprimé interne à l'appareil.

9. Appareil dispositif de polissage dentaire comprenant une unité de réservoir de matériau de sablage (10) selon l'une quelconque des revendications précédentes.
